# EUROPEAN PATENT APPLICATION

(11) **EP 3 944 690 A1**
(43) Date of publication of application: **26.01.2022**
(21) Application number: 19920557.6
(22) Date of filing: 20.03.2019
(51) Int. Cl.: H04W 72/04, H04W 64/00

(54) **USER DEVICE AND BASE STATION DEVICE**

(71) Applicant: NTT DOCOMO, INC., Chiyoda-Ku Tokyo 100-6150 (JP)
(72) Inventor: FUJIMURA, Naoki, Tokyo 100-6150 (JP); KAKISHIMA, Yuichi, Tokyo 100-6150 (JP); MOROGA, Hideyuki, Tokyo 100-6150 (JP); JIANG, Yu, Beijing, 100190 (CN); CHEN, Siyi, Beijing, 100190 (CN); WANG, Jing, Beijing, 100190 (CN); WANG, Xin, Beijing, 100190 (CN)
(74) Representative: Hoffmann Eitle
(86) International application number: PCT/JP2019/011927
(87) International publication number: WO 2020/188830

(57) **Abstract**

A user device includes a control unit that estimates a moving speed and a moving direction of the user device, and that estimates, based on the moving speed and the moving direction, a configuration of a reference signal to be used for a measurement; a transmitting unit that transmits, to a base station device, the estimated configuration of the reference signal; a receiving unit that receives a configuration of a reference signal determined by the base station device based on the estimated configuration of the reference signal; and a communication unit that executes the measurement based on the determined configuration of the reference signal.

## Description

### TECHNICAL FIELD

The present invention relates to a user device and a base station device in a radio communication system.

### BACKGROUND ART

In New Radio (NR) (which is also referred to as "5G") that is a successor system to Long Term Evolution (LTE), technology has been studied (e.g., Non-Patent Document 1) that meets the requirements, such as a requirement on a large capacity system, a requirement on a high data transmission rate, a requirement on low latency, a requirement on simultaneous connection of multiple terminals, a requirement on low cost, and a requirement on power saving.

In an NR system, use of a wide frequency range including a low frequency band that is the same as that of the LTE system and a high frequency band (millimeter wave band) that is higher than that of the LTE system is assumed. In particular, for a high frequency band, a propagation loss increases. Accordingly, in order to compensate for the propagation loss, studies are underway to adopt beamforming with a narrow beam width (e.g., Non-Patent Document 2).

### Related Art Document

### [Non-Patent Document]

Non-Patent Document 1: 3GPP TS 38.300 V15.4.0(2018-12)
Non-Patent Document 2: 3GPP TS 38.211 V15.4.0(2018-12)

### SUMMARY OF THE INVENTION

### [PROBLEM TO BE SOLVED BY THE INVENTION]

In an NR system, since a beam in a millimeter wave band or a frequency band lower than 6 GHz is used, a user device measures received levels while changing a beam direction and an antenna array, and the user device reports a measurement result to a base station device. However, depending on a moving state of a user device, an overhead for a measurement related to reception of a beam and an overhead for reporting a measurement result are assumed to be increased, and degradation of performance is assumed.

The present invention has been accomplished in view of the above-described point, and an object is to efficiently execute, by a user device, a measurement and reporting related to reception of a beam.

### [MEANS FOR SOLVING THE PROBLEM]

According to the disclosed technology, there is provided a user device including a control unit that estimates a moving speed and a moving direction of the user device, and that estimates, based on the moving speed and the moving direction, a configuration of a reference signal to be used for a measurement; a transmitting unit that transmits, to a base station device, the estimated configuration of the reference signal; a receiving unit that receives a configuration of a reference signal determined by the base station device based on the estimated configuration of the reference signal; and
a communication unit that executes the measurement based on the determined configuration of the reference signal.

### [ADVANTAGE OF THE INVENTION]

According to the disclosed technology, a user device can efficiently execute a measurement and reporting related to reception of a beam.

### BRIEF DESCRIPTION OF DRAWINGS

Fig. 1 is a diagram illustrating an operation example of a radio communication system according to an embodiment of the present invention.
Fig. 2 is a sequence diagram illustrating an example of a beam measurement.
Fig. 3 is a diagram illustrating an example (1) for determining measurement periodicity for a user device 20 according to an embodiment of the present invention.
Fig. 4 is a diagram illustrating an example (2) for determining measurement periodicity for the user device 20 according to an embodiment of the present invention.
Fig. 5 is a sequence diagram illustrating an example (1) of a measurement related to reception of a beam according to an embodiment of the present invention.
Fig. 6 is a sequence diagram illustrating an example (2) of a measurement related to reception of a beam according to an embodiment of the present invention.
Fig. 7 is a diagram illustrating an example (1) of a measurement period according to an embodiment of the present invention.
Fig. 8 is a diagram illustrating an example (2) of a measurement period according to an embodiment of the present invention.
Fig. 9 is a diagram illustrating an example (3) of a measurement period according to an embodiment of the present invention.
Fig. 10 is a diagram illustrating an example of a functional configuration of a base station device 10 according to an embodiment of the present invention.
Fig. 11 is a diagram illustrating an example of a functional configuration of the user device 20 according to an embodiment of the present invention.
Fig. 12 is a diagram illustrating an example of a hardware configuration of the base station device 10 or the user device 20 in an embodiment of the present invention.

### [EMBODIMENTS OF THE INVENTION]

The following embodiments of the present invention are described with reference to the drawings. Note that the embodiments described below are an example, and embodiments to which the present invention is applied are not limited to the following embodiments.

In an operation of a radio communication system of an embodiment of the present invention, existing technology is appropriately used. Here, the existing technology is, for example, existing LTE but is not limited to the existing LTE. Furthermore, the term "LTE" used in this specification has a broad meaning including LTE-Advanced and a system subsequent to LTE-Advanced (for example, NR), unless as otherwise specified.

In the embodiments of the present invention described below, terms used in the existing LTE are used, such as SS (Synchronization signal), PSS (Primary SS), SSS (Secondary SS), PBCH (Physical broadcast channel), PRACH (Physical random access channel), and the like. This is for convenience of description, and signals, functions, and the like, similar to these may be referred to by other names. The above-described terms in NR correspond to NR-SS, NR-PSS, NR-SSS, NR-PBCH, NR-PRACH, and the like. However, even if a signal is used for NR, the signal is not always specified as "NR-."

In the embodiments of the present invention, a duplex method may be a Time Division Duplex (TDD) method, a Frequency Division Duplex (FDD) method, or any other method (e.g., Flexible Duplex or the like).

In the following description, a method of transmitting a signal using a transmission beam may be digital beam forming of transmitting a signal multiplied by a pre-coding vector (pre-coded with a pre-coding vector) or may be analog beam forming for implementing beam forming using a variable phase shifter in a radio frequency (RF) circuit. Similarly, a method of receiving a signal using a reception beam may be digital beam forming of multiplying a received signal by a predetermined weight vector or may be analog beam forming of implementing beam forming using a variable phase shifter in a RF circuit. Hybrid beam forming in which digital beam forming and analog beam forming are combined may be adopted. Furthermore, transmitting a signal using a transmission beam may be transmitting a signal through a specific antenna port. Similarly, receiving a signal using a reception beam may be receiving a signal through a particular antenna port. An "antenna port" refers to a logical antenna port or a physical antenna port defined in the 3GPP standard.

A method of forming the transmission beam and the reception beam is not limited to the above-described methods. For example, in the base station device or the user device provided with a plurality of antennas, a method of changing an angle of each antenna may be used, a method in which a method using a precoding vector and a method of changing an angle of an antenna are combined may be used, a method of switching and using different antenna panels may be used, a method of using a combination of a plurality of antenna panels may be used, or any other method may be used. Furthermore, for example, a plurality of different transmission beams may be used in a high frequency band. Using a plurality of transmission beams is referred to as a multi-beam operation, and using a single transmission beam is referred to as a single beam operation.

In the embodiments of the present invention, "configuring" a radio parameter, or the like, may be "pre-configuring" a predetermined value, or configuring a radio parameter transmitted from a base station device 10 or a user device 20.

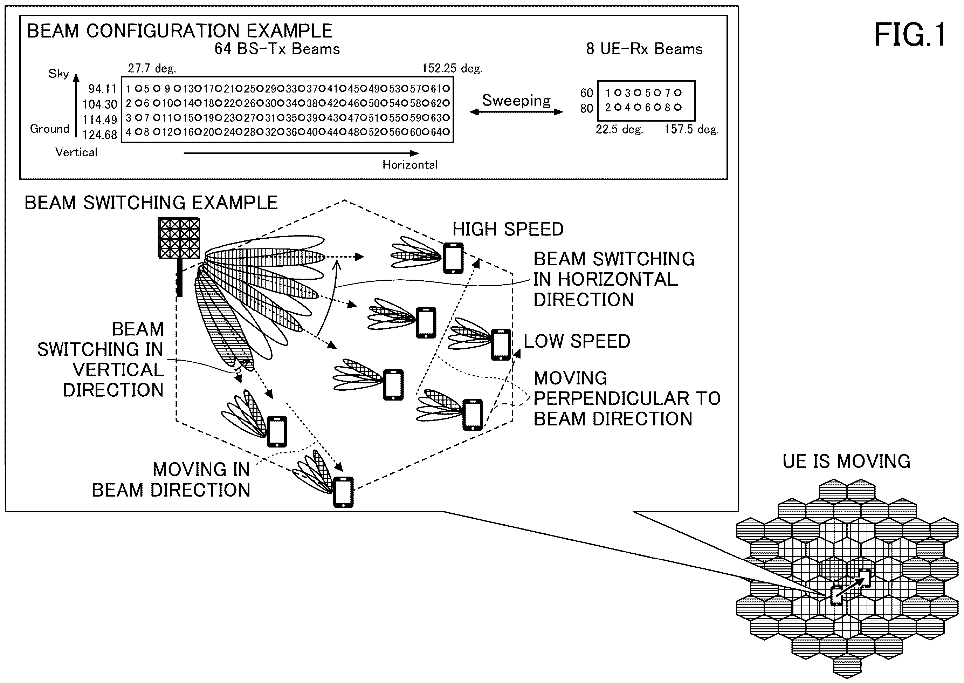

Fig. 1 is a diagram for illustrating an operation example of a radio communication system according to an embodiment of the present invention. The radio communication system according to the embodiment of the present invention includes the base station device 10 and the user device 20. The base station device 10 may be referred to as a Base Station (BS). The user device 20 may be referred to as a User Equipment (UE) or a Mobile Station (MS).

The base station device 10 provides one or more cells, and the base station device 10 is a communication device for performing radio communication with the user device 20. A physical resource of a radio signal may be defined in a time domain and a frequency domain, the time domain may be defined in terms of a number of OFDM symbols, and the frequency domain may be defined in terms of a number of subcarriers or a number of resource blocks. The base station device 10 transmits a synchronization signal and system information to the user device 20. The synchronization signal is, for example, NR-PSS and NR-SSS. The system information is transmitted, for example, on a NR-PBCH, and the system information is also referred to as broadcast information. As illustrated in Fig. 1, the base station device 10 transmits a control signal or data to the user device 20 on DL (Downlink), and the base station device 10 receives a control signal or data from the user device 20 on UL (Uplink). Each of the base station device 10 and the user device 20 may be able to transmit and receive signals by performing beamforming. Furthermore, each of the base station device 10 and the user device 20 may be configured to apply communication based on Multiple Input Multiple Output (MIMO) to DL or UL. Furthermore, each of the base station device 10 and the user device 20 may perform communication through a Secondary Cell (SCell) and a Primary Cell (PCell) during Carrier Aggregation (CA).

The user device 20 is a communication device provided with a radio communication function, such as a smartphone, a cellular phone, a tablet, or a wearable terminal. The user device 20 utilizes various communication services provided by a radio communication system by receiving control signals or data in DL from the base station device 10 and transmitting control signals or data in UL to the base station device 10.

The base station device 10 transmits a physical downlink control channel (PDCCH) or a Physical Downlink Shared Channel (PDSCH) to the user device 20. For example, information related to scheduling is transmitted to the user device 20 via the PDCCH, and data is transmitted to the user device 20 via the PDSCH. Furthermore, the user device 20 transmits a physical downlink shared channel (PUSCH) to the base station device 10 based on the information related to the scheduling.

As illustrated in Fig. 1, the base station device 10 transmits a plurality of beams to which transmission beamforming is applied. In the example of Fig. 1, the base station device 10 can configure a total of 64 beams, that is, the base station device 10 can configure 16 beams in a horizontal direction and 4 beams in a vertical direction. The user device 20 receives the beams transmitted from the base station device 10 by applying reception beamforming. In the example of Fig. 1, the user device 20 can configure a total of 8 beams, that is, the user device 20 can configure 4 beams in the horizontal direction and 2 beams in the vertical direction. Each of the base station device 10 and the user device 20 selects a beam with a favorable reception condition by switching beams.

As an example of beam switching, as illustrated in Fig. 1, for example, when the user device 20 moves along the beam direction, the base station device 10 changes a beam to be transmitted in the vertical direction. Furthermore, when the user device 20 moves in a direction perpendicular to the beam direction, a beam to be transmitted is changed in the horizontal direction by the base station device 10. Furthermore, the base station device 10 changes a beam so that a change in an angle between beams in the horizontal direction becomes large in a case in which the moving speed of the user device 20 in a direction perpendicular to the beam direction is high compared to a case in which the moving speed of the user device 20 in the direction perpendicular to the beam direction is low. Moreover, the user device 20 similarly changes a reception beam.

Beam management is more important in communications using a millimeter wave band than in communications using a band that is lower than 6 GHz. Since a beam in the millimeter wave band is narrow, a change in a propagation path environment caused by the movement of the user device 20 can be a factor that significantly reduces the throughput performance. Furthermore, since the number of beams in the millimeter wave band is large, it is difficult to measure all beams at a receiving device. Thus, for example, a measurement at the receiving device may be performed on a smaller group with appropriate beams.

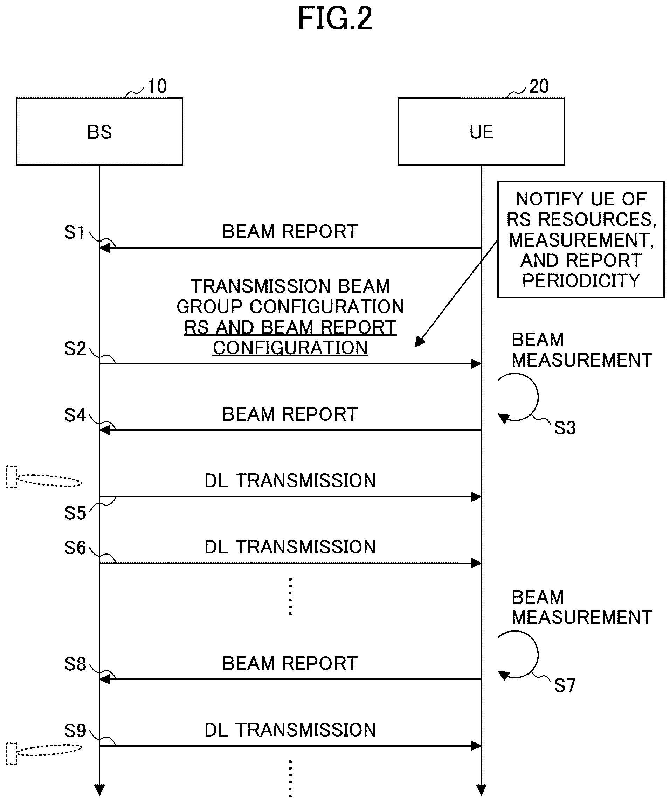

Fig. 2 is a sequence diagram for describing an example of beam measurement. Downlink beam management is described with reference to Fig. 2. The beam management is a procedure for determining an appropriate set of a transmission beam and a reception beam and notifying the UE 20 of the set. In general, the beam management includes procedures of beam measurement, beam report, and beam notification.

In step S1, a UE 20 transmits a beam report to a BS 10. The beam report includes a measurement result related to one or more beams. In step S2, the BS 10 transmits, to the UE 20, a transmission beam group configuration that is some or all of the transmission beams; and a configuration of a reference signal (RS) and beam report. The UE 20 is notified of RS resources, measurement periodicity, and report periodicity by the configuration of the RS and the beam report.

In step S3, the UE 20 performs beam measurement based on the configurations provided by notification in step S2. Subsequently, the UE 20 transmits a beam report to the BS 10 (S4). Subsequently, the BS 10 determines a transmission beam based on the beam report reported in step S4, and performs DL transmissions to the UE 20 (S5 and S6). Upon elapsing of a predetermined period starting from step S3 or based on an instruction from the BS 10, in step S7, the UE 20 executes beam measurement again. Subsequently, the UE 20 transmits a beam report to the BS 10 (S8). Subsequently, the BS 10 determines, for example, a transmission beam that differs from that of step S5 based on the beam report reported in step S8, and performs a DL transmission to the UE 20 (S9).

Here, in the downlink beam management procedure of the related art, the RS transmission periodicity and the beam report periodicity are set to the same periodicity regardless of the moving speed of the UE 20. However, the RS transmission and the beam report may differ from each other depending on the moving condition of the UE 20. For example, for the UE 20 moving at a high speed, an RS transmission and a beam report for beam tracking are necessary in greater frequency.

Accordingly, if short periodicity is applied to all the UEs 20, the UE 20 moving at a low speed has a large overhead for the RS transmission and the beam report. In contrast, if long periodicity is applied to all the UEs 20, the UE 20 moving at a high speed is not be able to track a change in a beam properly, and thus performance is degraded.

Thus, in an embodiment of the present invention, the periodicity of the RS transmission and the beam report is determined based on the moving speed and the moving direction of the UE 20. For example, long periodicity is set for the UE 20 moving at low speed, so that the overhead of the RS transmission and the beam report is reduced, and the complexity and power consumption of the UE 20 are reduced.

Table 1 is an example of determining the RS configuration and the beam report configuration based on the moving direction and the moving speed of the UE 20 estimated in the BS 10. The BS 10 transmits, to the UE 10, a configuration including the determined RS configuration and the determined beam report configuration.

**[Table 1]**

| Speed | Moving direction perpendicular to beams | Other moving directions |
|---|---|---|
| Low | Large (1000 ms) | Large (1000 ms) |
| Mid | Mid (500 ms) | Large (1000 ms) |
| High | Small (100 ms) | Mid (500 ms) |

As shown in Table 1, the moving speed of the UE 20 has three levels: low speed "Low;" medium speed "Mid;" and high speed "High." The classification by the moving speed may be less than three levels, for example, two levels, or may be four or more levels. When the moving direction of the UE 20 is perpendicular to the beam, periodicity "Large" is set for the speed "Low," periodicity "Mid" is set for the speed "Mid," and periodicity "Small" is set for the speed "High." Furthermore, when the moving direction of the UE 20 is other moving directions, periodicity "Large" is set for the speed "Low," periodicity "Large" is set for the speed "Mid," and periodicity "Mid" is set for the speed "High." For example, the periodicity "Large" may be 1000 ms, the periodicity "Mid" may be 500 ms, and the periodicity "Small" may be 100 ms. The "moving direction perpendicular to the beam" may be, for example, a direction included in a predetermined angle range centered on the direction perpendicular to the beam. Furthermore, periodicity may be integrally determined from the moving speed and the moving direction without distinguishing the moving speed and the moving direction or may be determined from only one of them. Furthermore, the determined RS configuration and the determined beam report configuration may be RS periodicity and beam report periodicity, as illustrated in Table 1, or may be other parameters related to beam measurement and report.

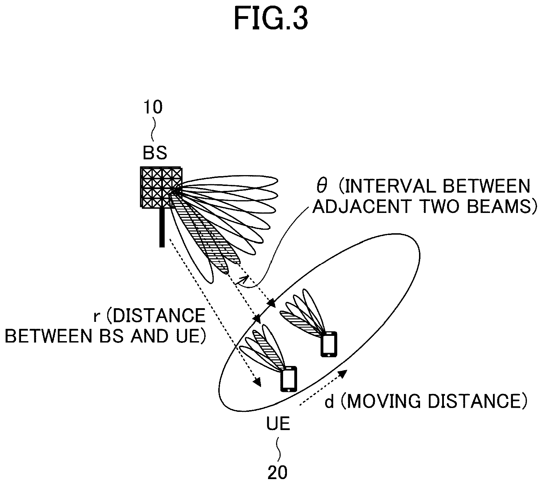

Fig. 3 is a diagram for illustrating an example (1) for determining the measurement periodicity of the user device 20 in an embodiment of the present invention. With reference to Fig. 3, an example of determining periodicity for changing a beam based on an antenna parameter and a scenario is described. The antenna parameter and the scenario are, for example, an interval between adjacent beams, a distance between the BS 10 and the UE 20, or the like.

As illustrated in Fig. 3, a moving distance d of the UE 20 is calculated as d = tan(θ) × r, where r is a distance between the BS 10 and the UE 20 and θ is an interval of adjacent beams. Periodicity p for changing a beam is calculated as p = d/s using a speed s of the UE 20 defined as the low speed "Low," the medium speed "Mid," or the high speed "High." The periodicity in the RS configuration and the beam report configuration is set to be shorter than the periodicity p for changing a beam.

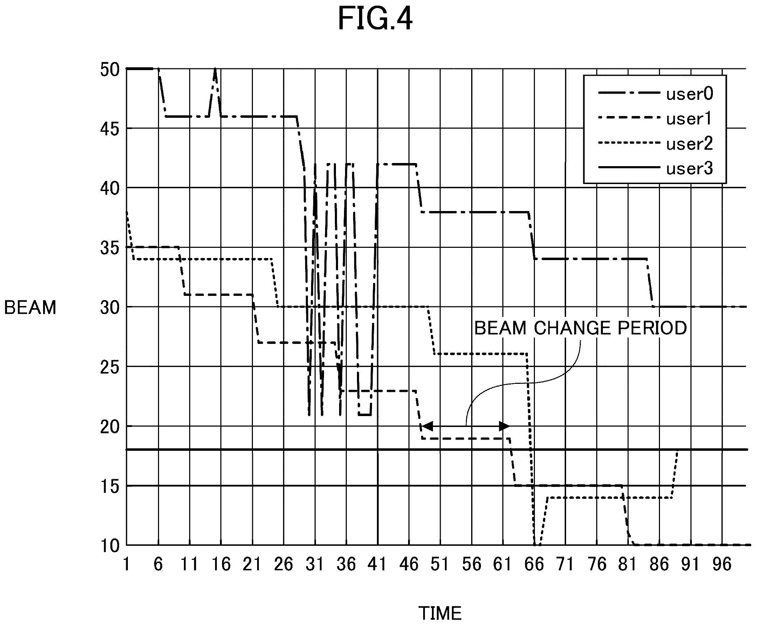

Fig. 4 is a diagram for illustrating an example (2) of determining the measurement periodicity of the user device 20 in an embodiment of the present invention. The periodicity for changing a beam may be determined based on simulation or network statistics. "Beam" illustrated in Fig. 4 indicates an index of a beam. Fig. 4 illustrates the changes in beams appropriate for four UEs 20, that is, "user0," "user1," "user2," and "user3." By applying the beam change periodicity illustrated in Fig. 4 to "user1," appropriate periodicity for the RS configuration and the beam report configuration can be set in "user1."

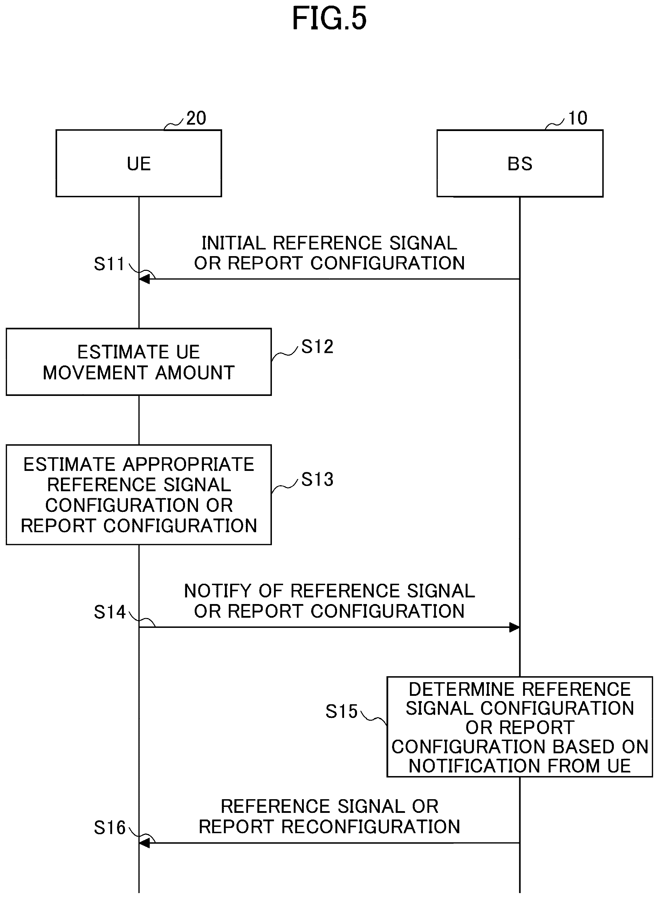

Fig. 5 is a sequence diagram for illustrating an example (1) of a measurement related to beam reception in an embodiment of the present invention. The UE 20 may transmit, to the network, a notification of the RS and report configuration appropriate for the beam management. The network may independently configure the RS configuration and the report configuration for the UE 20 based on feedback from each UE 20. Furthermore, the network may configure a set of the RS configuration and the report configuration for the UE 20. That is, both the RS configuration and the report configuration may be configured based on feedback from a single UE 20, such as a notification reflecting the moving amount of the UE 20.

In step S11, the BS 10 transmits an initial reference signal configuration or a report configuration to the UE 20. In addition to the initial reference signal configuration, information indicating initial report periodicity may be transmitted. In step S12, the UE 20 estimates a moving amount of the UE. The moving amount includes a speed, a direction, a rotation, or a combination thereof. Subsequently, the UE 20 estimates an appropriate reference signal configuration or an appropriate report configuration from Table 2, for example, based on the moving amount the UE (S13).

The UE 20 may estimate the moving amount, that is, the speed, the direction, and the rotation of the UE 20 based on the following items 1) to 3).
1) an index of a measured beam (for example, a synchronization signal block (SSB) or a channel state information reference signal (CSI-RS));
2) a measured reference signals received power (RSRP) value; and
3) a sensor or the like (for example, a global navigation satellite system (GNSS) or a gyro sensor) installed in the UE 20.

Table 2 illustrates an example of a mapping between the moving amount and the reference signal or report periodicity configuration.

**[Table 2]**

| Configuration # | Speed | Moving direction perpendicular to beams | Other moving directions |
|---|---|---|---|
| 1 | Low | Large (1000 ms) | Large (1000 ms) |
| : | : | : | : |
| n | Mid | Mid (500 ms) | Large (1000 ms) |
| : | : | : | : |
| m | High | Small (100 ms) | Mid (500 ms) |

As shown in Table 2, simply a moving speed or another index representing the moving amount may be used as the moving amount of the UE 20. The moving speed shown in Table 2 has three levels: low speed "Low," medium speed "Mid," and high speed "High." The moving speed may have more levels or may be two levels for simplicity. When the moving direction of the UE 20 is perpendicular to a beam, periodicity "Large" is set for a configuration #1, periodicity "Mid" is set for a configuration #n, and periodicity "Small" is set for a configuration #m. Furthermore, when the moving direction of the UE 20 is other moving directions, periodicity "Large" is set for the configuration #1, periodicity "Large" is set for the configuration #n, and periodicity "Mid" is set for the configuration #m. For example, the periodicity "Large" may be 1000 ms, the periodicity "Mid" may be 500 ms, and the periodicity "Small" may be 100 ms.

The UE 20 selects a configuration conforming to the moving amount of the UE 20 from Table 2, and transmits a notification to the network. For example, when the speed of the UE 20 is "Mid" and the UE 20 is moving in the direction perpendicular to a beam, Mid (500 ms) of the configuration #n is selected as the appropriate reference signal periodicity configuration and a notification is transmitted to the network. For example, when the speed of the UE 20 is "Low" and the UE 20 is moving in another direction, Large (1000 ms) of the configuration #1 is selected as the appropriate reference signal periodicity configuration and a notification is transmitted to the network. The periodicity may be integrally determined from the moving speed and the moving direction without distinguishing the moving speed and the moving direction or may be determined from only one of them. Furthermore, the determined RS configuration and the determined beam report configuration may be RS periodicity and beam report periodicity shown in Table 1 or other parameters related to beam measurement and report.

In step S14, the UE 20 transmits a notification of a reference signal configuration to the BS 10. Subsequently, the BS 10 determines the reference signal configuration or the report configuration based on the notification from the UE 10 (S15). Subsequently, the BS 10 transmits a reference signal reconfiguration or a report reconfiguration to the UE10 (S16). In addition to the reference signal reconfiguration, information indicating the report configuration may be transmitted.

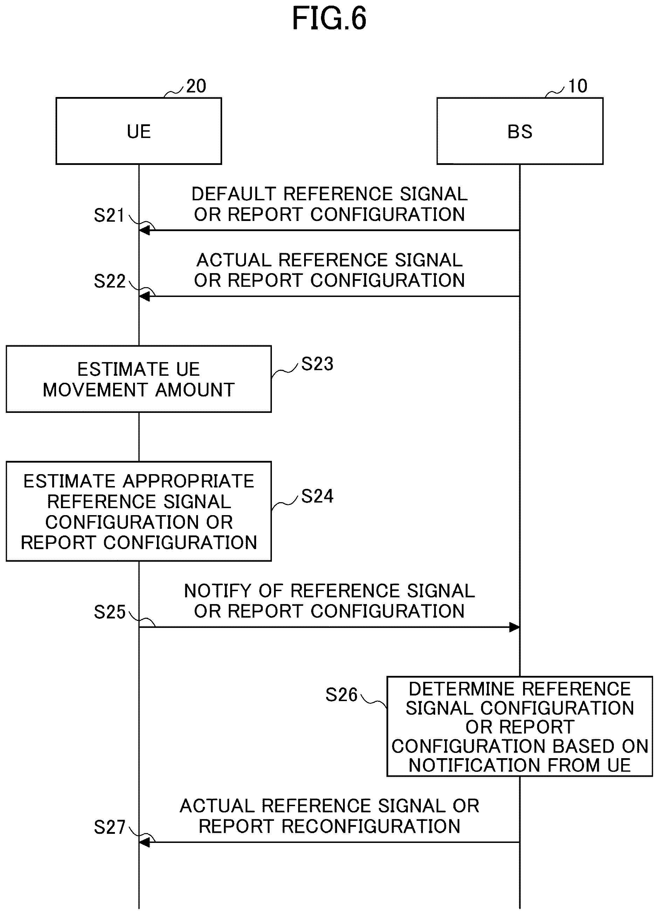

Fig. 6 is a sequence diagram for illustrating an example (2) of a measurement related to beam reception in an embodiment of the present invention. The network may transmit a notification of the reference signal configuration that is actually used for the beam management in addition to a default reference signal configuration. When the UE 20 performs the beam management, the UE 20 follows the actual configuration of the reference signal and the report. The actual reference signal configuration is activated or deactivated by signaling from the network. The signaling may be radio resource control (RRC) signaling, media access control (MAC) signaling, or downlink control information (DCI). The UE 20 can omit a resource or a report timing of the default reference signal based on the actual configuration of the reference signal and the report. When the configuration of the reference signal or the report is not provided, the measurement and the reporting are performed in accordance with the default configuration. Furthermore, Fig. 6 illustrates an example in which the BS 10 performs reconfiguration of the actual reference signal based on the notification of the configuration from the UE 20, but the BS 10 may determine the reconfiguration independently without receiving a notification from the UE 20.

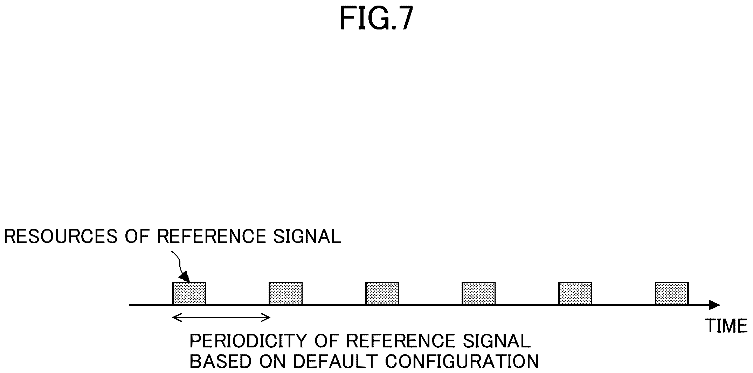

Fig. 7 is a diagram illustrating an example (1) of the measurement periodicity in an embodiment of the present invention. In step S21, the BS 10 transmits a default reference signal configuration to the UE 20. In addition to the default reference signal configuration, a default configuration indicating the report periodicity may be transmitted. Fig. 7 represents a state in which a resource of the reference signal is configured with the periodicity of the reference signal based on the default configuration.

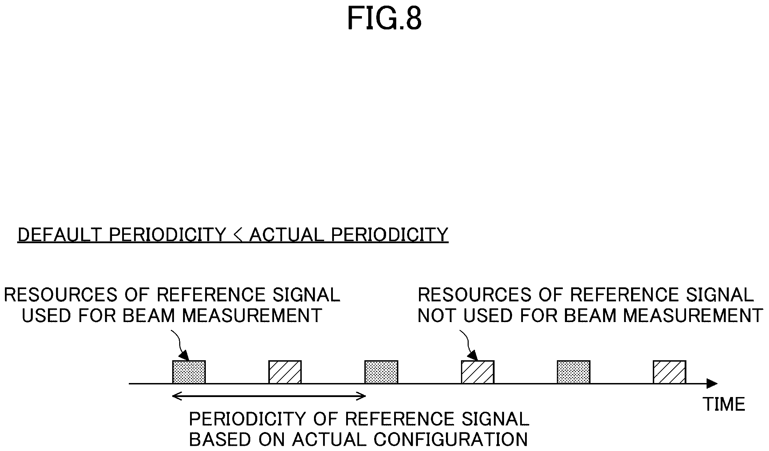

Fig. 8 is a diagram illustrating an example (2) of the measurement periodicity in an embodiment of the present invention. In step S22, the BS 10 transmits the actual configuration of the reference signal or the report to the UE 20. Fig. 8 illustrates a resource of the reference signal when the actual periodicity is longer than the default periodicity. A resource of the reference signal used for the beam measurement is configured with the periodicity of the reference signal based on the actual configuration, and a portion of the resource of the reference signal configured with the periodicity of the reference signal based on the default configuration is not used for the beam measurement.

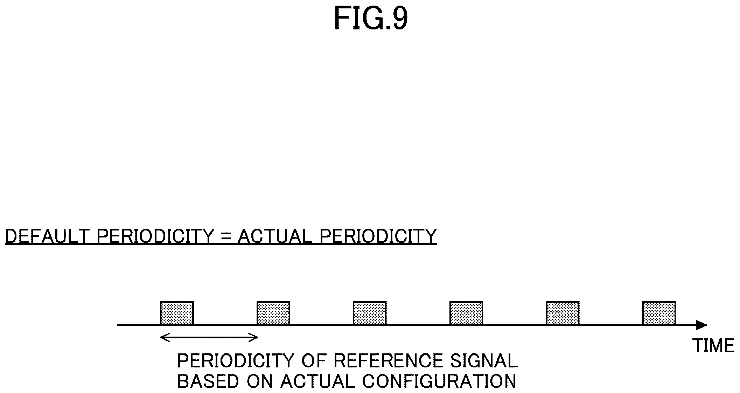

Fig. 9 is a diagram illustrating an example (3) of the measurement periodicity in an embodiment of the present invention. Fig. 9 illustrates a resource of the reference signal when the actual periodicity is equal to the default periodicity. A resource of the reference signal used for the beam measurement is configured with the periodicity of the reference signal based on the actual configuration, and the entire resource of the reference signal configured with the periodicity of the reference signal based on the default configuration is used for the beam measurement.

In step S23, the UE 20 estimates the moving amount of the UE. Subsequently, the UE 20 estimates an appropriate reference signal configuration from Table 2, for example, based on the UE moving amount (S24). In step S25, the UE 20 transmits, to the BS 10, a notification of the reference signal configuration. Subsequently, the BS 10 determines the reference signal configuration based on the notification from the UE 10 (S26). Step S23 to step S26 may be the same as step S12 to step S15 illustrated in Fig. 5. In step S27, the BS 10 transmits the actual configuration of the reference signal or the report to the UE 10. The actual reference signal or report reconfiguration may include information indicating the periodicity with which the report is actually performed, in addition to the information indicating the resource of the reference signal that is actually used for the beam measurement.

According to the above-described embodiments, the user device 20 can perform efficient beam management by reporting, to the base station device 10, the reference signal configuration for measuring the beam which is determined based on the estimated speed and direction of the user device 20. The base station device 10 can configure an efficient and flexible measurement by transmitting, to the user device 20, a notification of the actual reference signal configuration used for the beam management in addition to the default reference signal configuration.

Furthermore, the efficiency of configuring the reference signal and report can be enhanced. For example, for the user device 20 moving at low speed, the periodicity in the RS configuration or the beam report configuration can be increased, and for the user device 20 moving at a high speed, the periodicity in the RS configuration or the beam report configuration can be reduced. Accordingly, the overhead for the RS transmission and the beam report is reduced, and the complexity and the power consumption of the user device 20 can be reduced.

That is, the user device can efficiently execute measurement and reporting related to beam reception.

### (Device Configurations)

Next, examples of functional configurations of the base station device 10 and the user device 20 for executing the above-described processing and operation are described. The base station device 10 and the user device 20 include functions for executing the above-described embodiments. However, each of the base station device 10 and the user device 20 may be provided with only a part of the functions in the embodiments.

### <Base station device 10>

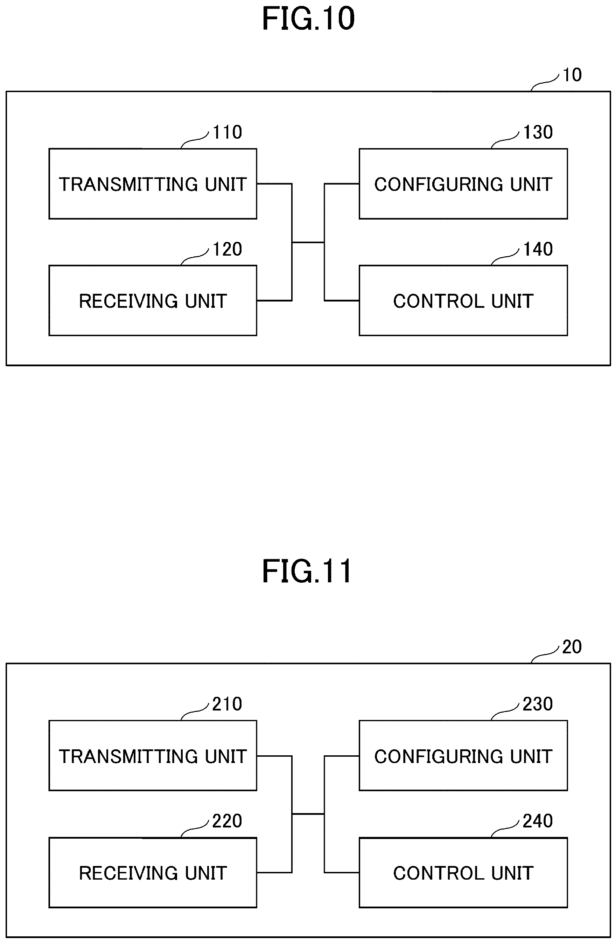

Fig. 10 is a diagram illustrating an example of a functional configuration of the base station device 10. As illustrated in Fig. 10, the base station device 10 includes a transmitting unit 110; a receiving unit 120; a configuring unit 130; and a control unit 140. The functional configuration illustrated in Fig. 10 is merely an example. Functional division and names of functional units may be any division and names, provided that operation according to the embodiments of the present invention can be executed.

The transmitting unit 110 includes a function for generating a signal to be transmitted to the user device 20 and transmitting the signal through radio. The receiving unit 120 includes a function for receiving various signals transmitted from the user device 20 and retrieving, for example, information of a higher layer from the received signals. The transmitting unit 110 has a function to transmit NR-PSS, NR-SSS, NR-PBCH, DL/UL control signals, DL/UL data signals, and the like, to the user device 20.

The configuring unit 130 stores preconfigured configuration information and various types of configuration information to be transmitted to the user device 20 in a storage device and reads the configuration information from the storage device if necessary. For example, content of the configuration information is, for example, a configuration on beam management by the user device 20 or the like.

As described in the embodiments, the control unit 140 determines a configuration of a reference signal and a report used for beam management based on configuration information for the reference signal received from the user device 20. Furthermore, the control unit 140 transmits, to the user device 20, a configuration for a reference signal. A functional unit related to signal transmission in the control unit 140 may be included in the transmitting unit 110, and a functional unit related to signal reception in the control unit 140 may be included in the receiving unit 120.

### <User device 20>

Fig. 11 is a diagram illustrating an example of a functional configuration of the user device 20. As illustrated in Fig. 11, the user device 20 has a transmitting unit 210, a receiving unit 220, a configuring unit 230, and a control unit 240. The functional configuration illustrated in Fig. 11 is merely an example. Functional division and names of functional units may be anything, provided that operation according to the embodiments of the present invention can be executed.

The transmitting unit 210 generates a transmission signal from transmission data and transmits the transmission signal through radio. The receiving unit 220 receives various types of signals through radio, and retrieves a signal of a higher layer from a received signal of a physical layer. The receiving unit 220 also has a function of receiving the NR-PSS, the NR-SSS, the NR-PBCH, the DL/UL/SL control signals, or the like transmitted from the base station device 10. Furthermore, for example, the transmitting unit 210 may transmit a physical sidelink control channel (PSCCH), a physical sidelink shared channel (PSSCH), a physical sidelink discovery channel (PSDCH), a physical sidelink broadcast channel (PSBCH), and the like to another user device 20 as the D2D communication, and the receiving unit 120 receives the PSCCH, the PSSCH, the PSDCH, the PSBCH, and the like from another user device 20.

The configuring unit 230 stores various types of configuration information received from the base station device 10 or the user device 20 through the receiving unit 220 in the storage device and reads the configuration information from the storage device if necessary. The configuring unit 230 also stores pre-configured configuration information. For example, content of the configuration information is a configuration for beam management by the user device 20 or the like.

As described in the embodiments, the control unit 240 estimates or measures moving speed or moving direction of the own device. Furthermore, the control unit 240 determines configuration information for a preferable reference signal based on the moving speed and the moving direction of the own device, and transmits the configuration information to the base station device 10. Furthermore, the control unit 240 measures a reference signal based on the configuration reported from the base station device 10. A functional unit related to signal transmission in the control unit 240 may be included in the transmitting unit 210, and a functional unit related to signal reception in the control unit 240 may be included in the receiving unit 220.

### <Hardware configuration>

The block diagrams (FIG. 10 and FIG. 11) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, etc. For example, a functional block (component) that functions to transmit is called a transmitting unit or a transmitter. In either case, as described above, the implementation method is not particularly limited.

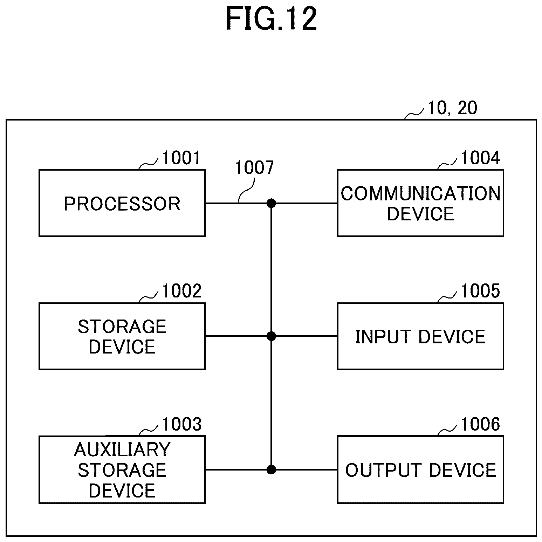

For example, the base station device 10, the user device 20, or the like in an embodiment of the present invention may function as a computer for performing a process of radio communication method according to the present disclosure. Fig. 12 is a diagram illustrating an example of a hardware configuration of the base station device 10 and the user device 20 according to an embodiment of the present disclosure. Each of the base station device 10 and the user device 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, device, unit, or the like. The hardware configuration of each of the base station device 10 and the user device 20 may be configured to include each device depicted, or may be configured without including some devices.

Each function in each of the base station device 10 and the user device 20 is implemented such that predetermined software (program) is read on hardware such as the processor 1001, the storage device 1002 and the like, and the processor 1001 performs an operation and controls communication by the communication device 1004 and at least one of reading and writing of data in the storage device 1002 and the auxiliary storage device 1003.

For example, the processor 1001 operates an operating system and controls the entire computer. The processor 1001 may be configured with a central processing unit (CPU) including an interface with a peripheral device, a control device, an operation device, a register, and the like. For example, the above-described control unit 140, the control unit 240, and the like may be implemented by the processor 1001.

Furthermore, the processor 1001 reads a program (program code), a software module, data, or the like from at least one of the auxiliary storage device 1003 and the communication device 1004 out to the storage device 1002, and executes various types of processes according to them. A program causing a computer to execute at least some of the operations described in the above embodiments is used as the program. For example, the control unit 140 of the base station device 10 illustrated in FIG. 10 may be implemented by a control program which is stored in the storage device 1002 and operates on the processor 1001. Furthermore, for example, the control unit 240 of the user device 20 illustrated in Fig. 11 may be implemented by a control program which is stored in the storage device 1002 and operates on the processor 1001. Various types of processes are described to be executed by one processor 1001 but may be executed simultaneously or sequentially by two or more processors 1001. The processor 1001 may be implemented by one or more chips. The program may be transmitted from a network via an electric communication line.

The storage device 1002 is a computer readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The above-described storage medium may be, for example, a database, a server, or any other appropriate medium including at least one of the storage device 1002 and the auxiliary storage device 1003.

The communication device 1004 is hardware (a transmitting and receiving device) for performing communication between computers via at least one of a wired network and a wireless network and is also referred to as a "network device," a "network controller," a "network card," a "communication module," or the like. The communication device 1004 may be configured to include a high frequency switch, a duplexer, a filter, a frequency synthesizer, and the like to implement at least one of frequency division duplex (FDD) and time division duplex(TDD). For example, transmitting and receiving antennas, an amplifier, a transceiver, a transmission line interface, and the like may be implemented by the communication device 1004. The transceiver may be implemented such that a transmitter and a receiver are physically or logically separated.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The devices such as the processor 1001 and the storage device 1002 are connected by the bus 1007 to communicate information with each other. The bus 1007 may be configured with a single bus or may be configured with different buses between the devices.

Furthermore, each of the base station device 10 and the user device 20 may be configured to include hardware such as a microprocessor, a digital signal processor (DSP), an application specific integrated circuit (ASIC), a programmable logic device (PLD), or a field programmable gate array (FPGA), or all or some of the functional blocks may be implemented by hardware. For example, the processor 1001 may be implemented by at least one of these pieces of hardware.

### (Conclusion of the embodiments)

As described above, according to the embodiments of the present invention, there is provided a user device including a control unit that estimates a moving speed and a moving direction of the user device, and that estimates, based on the moving speed and the moving direction, a configuration of a reference signal to be used for a measurement; a transmitting unit that transmits, to a base station device, the estimated configuration of the reference signal; a receiving unit that receives a configuration of a reference signal determined by the base station device based on the estimated configuration of the reference signal; and a communication unit that executes the measurement based on the determined configuration of the reference signal.

According to the above-described configuration, the user device 20 can perform efficient beam management by reporting, to the base station device 10, the reference signal configuration for measuring the beam that is determined based on the estimated speed and direction of the user device 20. The base station device 10 can configure an efficient and flexible measurement by transmitting, to the user device 20, a notification of the actual reference signal configuration used for the beam management, in addition to the default reference signal configuration. In other words, the user device can efficiently perform a measurement related to beam reception.

The estimated configuration of the reference signal and the determined configuration of the reference signal may include information indicating periodicity of a measurement of the reference signal. With this configuration, the base station device 10 can configure an efficient and flexible measurement by transmitting, to the user device 20, a notification of the actual reference signal configuration used for the beam management, in addition to the default reference signal configuration.

The moving direction may be classified into a direction within a predetermined range or a direction outside the predetermined range, the predetermined range including a moving direction perpendicular to a beam transmitted from the base station. With this configuration, it is possible to report, to the base station device 10, the reference signal configuration for measuring a beam that is determined based on the estimated speed and direction of the user device 20.

When the moving direction is a direction outside the predetermined range including the moving direction perpendicular to the beam transmitted from the base station device, the control unit may estimate periodicity of a measurement of the reference signal to be longer than periodicity of a measurement of the reference signal when the moving direction is a direction within the predetermined range. With this configuration, the efficiency of the reference signal and report configuration can be enhanced. For example, for the user device 20 moving at a low speed, the RS transmission or beam report periodicity can be increased, and for the user device 20 moving at a high speed, the RS transmission or beam report periodicity can be reduced. Accordingly, the overhead for the RS transmission and the beam report is reduced, and the complexity and the power consumption of the user device 20 can be reduced.

Periodicity of a measurement of the reference signal included in the determined configuration of the reference signal may be longer than periodicity of the reference signal in a default configuration. With this configuration, the efficiency of the reference signal and report configuration can be enhanced.

Furthermore, according to the embodiments of the present invention, there is provided a base station device including a receiving unit that receives, from a user device, a configuration of a reference signal used for a measurement, the configuration being estimated based on a moving speed and a moving direction of the user device; a control unit that determines a configuration of the reference signal based on the estimated configuration of the reference signal; a transmitting unit that transmits, to the user device, the determined configuration of the reference signal; and a communication unit that transmits the reference signal based on the determined configuration of the reference signal.

According to the above-described configuration, the user device 20 can perform efficient beam management by reporting, to the base station device 10, the reference signal configuration for measuring the beam that is determined based on the estimated speed and direction of the user device 20. The base station device 10 can configure an efficient and flexible measurement by transmitting, to the user device 20, a notification of the actual reference signal configuration used for the beam management, in addition to the default reference signal configuration. In other words, the user device can efficiently perform a measurement related to beam reception.

### (Supplemental embodiment)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station device 10 and the user device 20 are described using the functional block diagrams, but such devices may be implemented by hardware, software, or a combination thereof. Software executed by the processor included in the base station device 10 according to the embodiment of the present invention and software executed by the processor included in the user device 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any other appropriate storage medium.

Furthermore, a notification of information is not limited to the aspect or embodiment described in the present disclosure and may be provided by any other method. For example, the notification of information may be given by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an RRC message and may be, for example, an RRC connection setup message, an RRC connection reconfiguration message, or the like.

Each aspect and embodiment described in the present disclosure may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), NR (new Radio), W-CDMA (registered trademark), GSM (registered trademark), CDMA 2000, Ultra Mobile Broadband (UMB), IEEE 802.11 (Wi-Fi(registered trademark)), IEEE 802.16 (WiMAX(registered trademark)), IEEE 802.20, Ultra-WideBand (UWB), Bluetooth (registered trademark), a system using any other appropriate system, and next generation systems extended based on these standards. Furthermore, a plurality of systems (e.g., a combination of at least one of LTE and LTE-A with 5G) may be combined to be applied.

The processing procedures, the sequences, the flowcharts, and the like of the respective aspects/embodiments described in this specification may be rearranged in order provided that there is no contradiction. For example, the method described in the present disclosure presents elements of various steps with an exemplary order and is not limited to a presented specific order.

In this specification, a specific operation to be performed by the base station device 10 may be performed by an upper node in some cases. In the network including one or more network nodes including the base station device 10, various operations performed for communication with the user device 20 can be obviously performed by at least one of the base station device 10 and any network node (for example, an MME, an S-GW, or the like is considered, but it is not limited thereto) other than the base station device 10. A case is exemplified above in which there is one network node other than the base station device 10. The one network node may be a combination of a plurality of other network nodes (e.g., MME and S-GW).

Information, a signal, or the like described in the present disclosure may be output from a higher layer (or a lower layer) to a lower layer (or a higher layer layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination in the present disclosure may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of the wired technology and the radio technology are included in a definition of a transmission medium.

Information, signals, and the like described in the present disclosure may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or any combination thereof.

The terms described in the present disclosure and terms necessary for understanding the present disclosure may be replaced with terms having the same or similar meanings. For example, at least one of a channel and a symbol may be a signal. Further, a signal may be a message. Further, a component carrier (CC) may be referred to as a "carrier frequency," a "cell," or the like.

The terms "system" and "network" used in the present disclosure are used interchangeably.

Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names assigned to the various channels and the information elements are not limited in any respect.

In the present disclosure, the terms "base station (BS)," "radio base station," "base station device," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base stations may also be indicated by terms such as a macrocell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car or the like), or a robot (manned type or unmanned type). At least one of the base station and the mobile station includes a device which need not necessarily move during a communication operation. For example, at least one of the base station and the mobile station may be an Internet of things (IoT) device such as a sensor.

Further, the base station in the present disclosure may be replaced with a user terminal. For example, each aspect/embodiment of the present disclosure may be applied to a configuration in which communication between the base station and the user terminal is replaced with communication between a plurality of units of user device 20 (for example, which may be referred to as device-to-device (D2D) or vehicle-to-everything (V2X)). In this case, the user device 20 may have the functions of the base station device 10 described above. Further, the terms "uplink" and "downlink" may be replaced with terms (for example, "side") corresponding to inter-terminal communication. For example, an uplink channel, a downlink channel, or the like may be replaced with side channels.

Similarly, the user terminal in the present disclosure may be replaced with the base station. In this case, the base station may have the functions of the above-mentioned user terminal.

The terms "determine (determining)" and "decide (determining)" used in this disclosure may include various types of operations. For example, "determining" and "deciding" may include deeming that a result of judging, calculating, computing, processing, deriving, investigating, looking up (search, inquiry) (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided. "Determine (decision)" may be replaced with "assuming," "expecting" "considering," and so forth.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case in which used in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS and may be referred to as a pilot, depending on a standard to be applied.

A phrase "based on" used in the present disclosure is not limited to "based only on" unless otherwise stated. In other words, a phrase "based on" means both "based only on" and "based on at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Further, "means" in the configuration of each of the above devices may be replaced with "unit," "circuit," "device," or the like.

When "include," "including," and variations thereof are used in the present disclosure, these terms are intended to be comprehensive, similar to a term "provided with (comprising)." Further, the term "or" used in the present disclosure is intended not to be an exclusive OR.

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology.

The numerology may be a communication parameter applied to at least one of transmission and reception of a certain signal or channel. For example, the numerology may indicate at least one of a subcarrier spacing (SCS), a bandwidth, a symbol length, a cyclic prefix length, a transmission time interval (TTI), a number of symbols per TTI, a radio frame configuration, a specific filtering process performed in the frequency domain by a transceiver, a specific windowing process performed in the time domain by a transceiver, and the like.

The slot may include one or more symbols (orthogonal frequency division multiplexing (OFDM) symbols, single carrier frequency division multiple access (SC-FDMA) symbols, or the like) in the time domain. The slot may be a time unit based on the numerology.

The slot may include a plurality of mini slots. Each mini slot may include one or more symbols in the time domain. Further, the mini slot may be referred to as a sub-slot. The mini slot may include fewer symbols than a slot. A PDSCH (or PUSCH) transmitted in units of times greater than the mini slot may be referred to as a PDSCH (or PUSCH) mapping type A. A PDSCH (or PUSCH) transmitted using a mini slot may be referred to as a PDSCH (or PUSCH) mapping type B.

All of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a transmission time interval (TTI: Transmission Time Interval), or a plurality of consecutive subframes may be referred to as TTIs, or one slot or one mini slot may be referred to as a TTI. In other words, at least one of the subframe and the TTI may be a subframe (1 ms) in the existing LTE, may be a period shorter than 1 ms (for example, 1 to 13 symbols), or may be referred to as a period longer than 1 ms. A unit representing the TTI may be referred to as slot, a mini slot, or the like instead of the subframe.

Here, for example, the TTI refers to a minimum time unit of scheduling in radio communication. For example, in the LTE system, the base station performs scheduling of allocating a radio resource (a frequency bandwidth, a transmission power, or the like which can be used in each user device 20) to each user device 20 in units of TTIs. The definition of the TTI is not limited thereto.

The TTI may be a transmission time unit such as a channel coded data packet (transport block), a code block, or a code word, or may be a processing unit such as scheduling or link adaptation. Further, when a TTI is provided, a time interval (for example, the number of symbols) in which a transport block, a code block, a code word, or the like is actually mapped may be shorter than the TTI.

Further, when one slot or one mini slot is referred to as a TTI, one or more TTIs (that is, one or more slots or one or more mini slots) may be a minimum time unit of scheduling. Further, the number of slots (the number of mini slots) forming the minimum time unit of scheduling may be controlled.

A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than the common TTI may be referred to as a reduced TTI, a short TTI, a partial TTI (a partial or fractional TTI), a reduced subframe, a short subframe, a mini slot, a sub slot, a slot, or the like.

Further, a long TTI (for example, a normal TTI, a subframe, or the like) may be replaced with a TTI having a time length exceeding 1 ms, and a short TTI (for example, a reduced TTI or the like) may be replaced with a TTI having a TTI length that is less than a TTI length of a long TTI and that is longer than or equal to 1 ms.

The resource block (RB) is a resource allocation unit in the time domain and the frequency domain and may include one or more consecutive subcarriers in the frequency domain. The number of subcarriers included in an RB may be the same irrespective of a numerology and may be, for example, 12. The number of subcarriers included in an RB may be determined based on a numerology.

Further, a time domain of an RB may include one or more symbols and may be a length of one slot, one mini slot, one subframe, or one TTI. One TTI, one subframe, or the like may be formed of one or more resource blocks.

Further, one or more RBs may be referred to as a physical resource block (PRB), a sub carrier group (SCG), a resource element group (REG), a PRB pair, an RB pair, or the like.

Further, the resource block may be formed of one or more resource elements (RE). For example, one RE may be a radio resource region of one subcarrier and one symbol.

A bandwidth part (BWP) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and the UE need not assume that predetermined signals/channels are transmitted and received outside an active BWP. Further, a "cell," a "carrier," or the like in the present disclosure may be replaced with a "BWP."

Structures of the radio frame, the sub frame, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, a symbol length, a cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, a term "A and B are different" may mean "A and B are different from each other." Further, the term may mean "each of A and B is different from C." Terms such as "separated," "coupled," or the like may also be interpreted similarly to "different."

Each aspect/embodiment described in the present disclosure may be used alone, in combination, or may be switched in accordance with the execution. Further, notification of predetermined information (for example, notification of "being X") is not limited to being performed explicitly, but may be performed by implicitly (for example, not notifying the predetermined information).

In the present disclosure, the transmitting unit 210 and the receiving unit 220 are an example of a communication unit. The transmitting unit 110 and the receiving unit 120 are an example of a communication unit.

Although the present disclosure is described above in detail, it is obvious to those skilled in the art that the present disclosure is not limited to the embodiments described in the present disclosure. The present disclosure may be implemented as revised and modified embodiments without departing from the gist and scope of the present disclosure as set forth in claims. Accordingly, the description of the present disclosure is for the purpose of illustration and does not have any restrictive meaning to the present disclosure.

### LIST OF REFERENCE SYMBOLS

- 10: base station device

- 110: transmitting unit
- 120: receiving unit
- 130: configuring unit
- 140: control unit
- 20: user device
- 210: transmitting unit
- 220: receiving unit
- 230: configuring unit
- 240: control unit
- 1001: processor
- 1002: storage device
- 1003: auxiliary storage device
- 1004: communication device
- 1005: input device
- 1006: output device

## Claims

1. A user device comprising:
a control unit that estimates a moving speed and a moving direction of the user device, and that estimates, based on the moving speed and the moving direction, a configuration of a reference signal to be used for a measurement;
a transmitting unit that transmits, to a base station device, the estimated configuration of the reference signal;
a receiving unit that receives a configuration of a reference signal determined by the base station device based on the estimated configuration of the reference signal; and
a communication unit that executes the measurement based on the determined configuration of the reference signal.

2. The user device of claim 1, wherein the estimated configuration of the reference signal and the determined configuration of the reference signal include information indicating periodicity of a measurement of the reference signal.

3. The user device of claim 2, wherein the moving direction is classified into a direction within a predetermined range or a direction outside the predetermined range, the predetermined range including a moving direction perpendicular to a beam transmitted from the base station.

4. The user device of claim 3, wherein, when the moving direction is a direction outside the predetermined range including the moving direction perpendicular to the beam transmitted from the base station device, the control unit estimates periodicity of a measurement of the reference signal to be longer than periodicity of a measurement of the reference signal when the moving direction is a direction within the predetermined range.

5. The user device of claim 2, wherein periodicity of a measurement of the reference signal included in the determined configuration of the reference signal is longer than periodicity of the reference signal in a default configuration.

6. A base station device comprising:
a receiving unit that receives, from a user device, a configuration of a reference signal used for a measurement, the configuration being estimated based on a moving speed and a moving direction of the user device;
a control unit that determines a configuration of the reference signal based on the estimated configuration of the reference signal;
a transmitting unit that transmits, to the user device, the determined configuration of the reference signal; and
a communication unit that transmits the reference signal based on the determined configuration of the reference signal.
